Europäisches Patentamt

European Patent Office

Office européen des brevets

(11) Veröffentlichungsnummer: **0 264 358**
**A2**

(12) **EUROPÄISCHE PATENTANMELDUNG**

(21) Anmeldenummer: 87890221.2

(22) Anmeldetag: 07.10.87

(51) Int. Cl.4: **F 16 K 11/04**

(30) Priorität: **15.10.86 AT 2745/86**

(43) Veröffentlichungstag der Anmeldung:
**20.04.88 Patentblatt 88/16**

(84) Benannte Vertragsstaaten: **DE ES FR GB IT**

(71) Anmelder: **HOERBIGER VENTILWERKE AKTIENGESELLSCHAFT**
**Braunhubergasse 23**
**A-1110 Wien (AT)**

(72) Erfinder: **Frisch, Herbert**
**Reibergasse 9**
**A-1238 Wien (AT)**

(74) Vertreter: **Klein, Adam, Dipl.Ing.**
**Fasangasse 49**
**A-1030 Wien (AT)**

(54) **Mehrwege-Sitzventil.**

(57) Die mit auf einem axialbeweglichen Schaltkörper feststehenden Dichtplatten zusammenwirkenden Sitzkörper des Mehrwege-Sitzventils sind in axialer Richtung beweglich, wobei benachbarte Sitzkörper jeweils paarweise gleich ausgebildet und zu einer Funktionseinheit zusammengefaßt gegengleich mit voneinander abgewendeten Sitzflächen angeordnet sind. Der eine Sitzkörper jeder Funktionseinheit bildet den Zuluftsitz und der andere den Entlüftungssitz. Es lassen sich damit Mehrwege-Sitzventile realisieren, die die Vorteile der Mehrwege-Kobenschieberventile mit denen der Sitzventile kombinieren.

Fig. 1

EP 0 264 358 A2

**Beschreibung**

"Mehrwege-Sitzventil"

Die Erfindung betrifft ein Mehrwege-Sitzventil, mit einem in einer durchgehenden Bohrung des die Mediumanschlüsse aufweisenden Ventilgehäuses angeordneten Einschiebegehäuse, welches quer zur Achsrichtung geteilt, mit Zu- bzw. Abströmöffnungen versehen und gegen die Bohrung abgedichtet ist und welches in axialer Richtung bewegliche und mittels Dichtringen gegen das Einschiebegehäuse abgedichtete Sitzkörper aufnimmt, deren Sitzflächen mit auf einem axial beweglichen Schaltkörper feststehenden Dichtplatten zusammenwirken.

Ein derartiges Ventil ist beispielsweise aus der DE-OS 35 05 299 bekannt, wobei die erwähnte Anordnung der in axialer Richtung beweglichen Sitzkörper bei dem bekannten Ventil hauptsächlich deswegen vorgenommen wurde, um ohne die Notwendigkeit der Einhaltung extrem enger Fertigungstoleranzen dennoch eine sichere Dichtungsanlage der verschiedenen Dichtplatten an den zugehörigen Ventilsitzen sicherstellen zu können. Aufgrund der sonstigen Ausbildung dieses bekannten Ventils bzw. der Anordnung der Ventilsitze sind die Möglichkeiten des Einsatzes bzw. die möglichen Verwendungsweisen im wesentlichen genau so beschränkt wie bei üblichen Mehrwege-Sitzventilen mit starr angeordneten Ventilsitzen, welche zwar gegenüber den üblicherweise für Mehrwege-Ventile verwendeten Schieberventilen Vorteile bezüglich der geringen erforderlichen Öffnungshübe bei großen Öffnungsquerschnitten und dergleichen haben, aber in punkto Schaltmöglichkeiten, Vertauschbarkeit der Anschlüsse und dergleichen den Schieberventilen klar unterlegen sind.

Aufgabe der vorliegenden Erfindung ist es, ein Mehrwege-Sitzventil der eingangs genannten Art so auszubilden, daß die genannten Nachteile der bekannten Anordnung vermieden werden und daß insbesondere eine bezüglich Schaltmöglichkeiten, Austauschbarkeit der Funktionen und dergleichen den Schieberventilen gleichwertige Ausbildung bei gleichzeitiger Beibehaltung der Vorteile der Sitzventile möglich wird.

Dies wird gemäß der vorliegenden Erfindung dadurch erreicht, daß alle Sitzkörper beweglich sind, daß benachbarte Sitzkörper paarweise gleich ausgebildet und zu jeweils einer Funktionseinheit zusammengefaßt gegengleich mit voneinander abgewendeten Sitzflächen angeordnet sind und daß jeweils der eine Sitzkörper jeder Funktionseinheit den Zuluftsitz und der andere Sitzkör per den Entlüftungssitz bildet. Damit kann beispielsweise unter Verwendung üblicher Gehäuse für Mehrwege-Schieberventile mit sehr wenigen untereinander gleich ausgebildeten Bauteilen ein Mehrwege-Sitzventil mit gleicher Funktion bzw. gleichen Anschluß-und Schaltmöglichkeiten wie ein Schieberventil aufgebaut werden. Es können beliebig viele Wege ohne die ansonsten bei Sitzventilen ziemlich unvermeidlichen Überschneidungen gesteuert werden, wobei die gegenüber den Schieberventilen gegebenen, oben genannten Vorteile der Sitzventile voll erhalten bleiben.

Soferne nur für die Ansteuerung des Schaltkörpers genügend große Kräfte vorhanden sind, können Zuluft und Entlüftung einfach vertauscht werden, ohne eine Änderung des Aufbaus des Ventils zu erfordern. Der Steuerausgang ist jeweils zwischen den beiden zusammengehörigen Sitzkörpern jeder Funktionseinheit nach außen geführt; der Zuluft- sowie der Entlüftungsanschluß liegt jeweils an den Außenseite jeder Funktionseinheit.

Als weiterer Vorteil dieser Anordnung ist noch zu nennen, daß damit Mittelstellungsventile auf einfachste Weise wie bei Kolbenschiebern möglich sind, wobei im Gegensatz zu den Letztgenannten nicht einmal zusätzliche Bauteile erforderlich sind. Die Arbeitsluft muß dabei auch nicht wie bei bekannten, konventionellen Mittelstellungs-Sitzventilen durch Kanäle im Gehäuse geführt werden.

In weiterer Ausgestaltung der Erfindung ist vorgesehen, daß in an sich bekannter Weise für den an jedem der Sitzkörper zur Abdichtung gegen das Einschiebegehäuse vorgesehenen Dichtring zwei Anschläge vorgesehen sind, von denen sich der eine am Einschiebegehäuse und der andere am Sitzkörper befindet. Die damit gegebene spezielle Art der Abdichtung der beweglichen Sitzkörper ist an sich aus der AT-PS 376 778 bekannt und ermöglicht auf sehr einfache Weise eine druckunterstützte Abdichtung durch Veränderung der druckbeaufschlagten Fläche in Abhängigkeit von der Einwirkungsrichtung des Druckes.

Nach einer besonders bevorzugten weiteren Ausgestaltung der Erfindung sind die beiden Sitzkörper jeder Funktionseinheit mittels einer zwischen ihnen angeordneten und an ihnen angreifenden gemeinsamen Druckfeder gegen Anschläge am Einschiebegehäuse und/oder gegen die zugehörige Dichtplatte gedrückt. Diese Druckfeder hat an sich nur die Reibung der zur Abdichtung der Sitz körper gegenüber dem Einschiebegehäuse dienenden Dichtringe zu überwinden, um die Sitzkörper in definierten Stellungen an den jeweiligen Anschlägen zu halten, und kann auch als zusätzliche Unterstützung zu der oben angeführten speziellen Art der Druckunterstützung verwendet werden.

Nach einer weiteren Ausgestaltung der Erfindung ist vorgesehen, daß die Dichtringe zur Abdichtung der beweglichen Sitzkörper gegen das Einschiebegehäuse im wesentlichen gleichen Durchmesser aufweisen, wie die zur Abdichtung des Schaltkörpers gegen seine Führung im Enschiebegehäuse vorgesehenen Dichtringe. Damit ist der Schaltkörper durckentlastet und eine leichte, einfache und sichere Ventilbetätigung möglich.

Die Erfindung wird im folgenden anhand der in der Zeichnung teilweise schematisch dargestellten Ausführungsbeispiele näher erläutert. Fig. 1 zeigt ein erfindungsgemäßes 3/3-Wege-Sitzventil mit geschlossener Mittelstellung, Fig. 2 zeigt ein 3/2-Wege-Sitzventil für Dauersignal-Betrieb in erfindungsgemäßer Ausführung, Fig. 3 zeigt ein 5/2-Wege-Sitzventil nach der Erfindung, ebenfalls für Dauersignal-Betrieb, Fig. 4 zeigt ein weiteres erfindungsgemäß ausgebildetes 5/2-Wege-Sitzventil für Impulsbetrieb - all diese Figuren sind im Längsschnitt und teilweise schematisch dargestellt - und Fig. 5 zeigt ein Detail aus einem Längsschnitt einer anderen erfindungsgemäßen Ausführungsform.

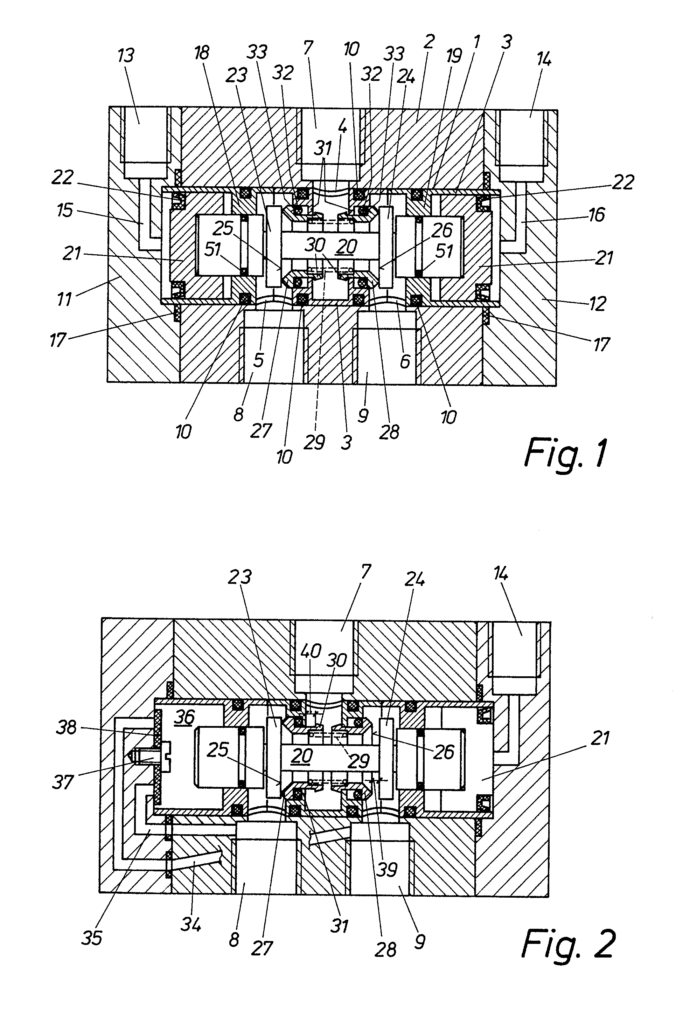

Das 3/3-Wege-Sitzventil nach Fig. 1 weist ein in einer durchgehenden Bohrung 1 des Ventilgehäuses 2 angeordnetes Einschiebegehäuse 3 auf, welches zur Ermöglichung bzw. Erleichterung der Montage des Ventils quer zur Achsrichtung geteilt ist und hier aus drei Teilen besteht. Im Einschiebegehäuse 3 sind Zu- bzw. Abströmöffnungen 4,5,6 vorgesehen, die mit den Mediumanschlüssen 7,8,9 korrespondieren und mittels am Außenumfang des Einschiebegehäuses 3 in entsprechenden Nuten angeordneter Dichtringe 10 gegen die Bohrung 1 abgedichtet sind.

Die Bohrung 1 bzw. das Einschiebegehäuse 3 ist auf beiden Stirnseiten mittels Deckeln 11 bzw. 12 abgeschlossen, welche die Steueranschlüsse 13,14 und Zuleitungen 15,16 zur Betätigung des Ventils aufweisen und mit Dichtscheiben 17 abgedichtet sind.

Im Inneren des Einschiebegehäuses 3 ist in Bereichen 18,19 ein axial beweglicher Schaltkörper 20 mittels Dichtringen 51 abgedichtet geführt, der an beiden Enden Umsteuerkolben trägt.

Diese Umsteuerkolben 21 sind an der Innenwand des Einschiebegehäuses 3 geführt und mittels Dichtungen 22 abgedichtet und ermöglichen damit bei entsprechender Druckbeaufschlagung über die Steueranschlüsse 13 bzw. 14 die Umschaltung des Schaltkörpers 20.

In der dargestellten drucklosen Mittelstellung liegen zwei am Schaltkörper 20 feststehende Dichtplatten 23, 24 abdichtend an Sitzflächen 25, 26 an, welche auf axial gegenüber dem Einschiebegehäuse 3 beweglichen Sitzkörpern 27,28 angeordnet sind. Diese Sitzkörper 27,28 sind gleich ausgebildet und zu einer Funktionseinheit zusammengefaßt gegengleich mit voneinander abgewendeten Sitzflächen 25, 26 angeordnet und werden mittels einer zwischen ihnen angreifenden gemeinsamen Druckfeder 29 gegen die jeweils zugehörige Dichtplatte 23,24 gedrückt. Am einander zugekehrten inneren Ende der Sitzkörper 27,28 sind im Querschnitt nasenförmige Ansätze 30 vorgesehen, die mit Anschlägen 31 am Einschiebegehäuse 3 zusammenwirken.

Für den an jedem der Sitzkörper 27,28 zur Abdichtung gegen das Einschiebegehäuse 3 vorgesehenen Dichtring 32 sind zwei Anschläge vorgesehen, von denen der eine von der dem jeweiligen Dichtring zugewandten Seite des Anschlags 31 am Einschiebegehäuse 3 und der andere von einer Schulter 33 am jeweiligen Sitzkörper 27,28 gebildet ist.

Der mittlere Mediumanschluß 7 stellt hier den Steuerausgang dar; von den außenliegenden Mediumanschlüssen 8,9 stellt jeweils einer den Zuluftanschluß und einer den Entlüftungsanschluß dar. Bei Herausbewegung des Schaltkörpers 20 aus der dargestellten Mittelstellung beispielsweise durch Druckbeaufschlagung des rechten Umsteuerkolbens 21 über den Steueranschluß 14 bleibt die Dichtfläche 26 des rechtens Sitzkörpers 28 in Kontakt mit der zugehörigen Dichtplatte 24, womit der Sitzkörper 28 zusammen mit dem Dichtring 32 bis zu dessen Anliegen am Anschlag 31 verschoben wird. Durch die Wirkung der Druckfeder 29 wird der linke Sitzkörper 27 vorerst nach links mitgenommen, bis der Ansatz 30 vom Anschlag 31 auf der linken Seite aufgehalten wird und damit dieser Sitzkörper 27 stehentleibt. Ab diesen Zeitpunkt öffnet die Sitzfläche 25 bzw. die Dichtplatte 23 auf der linken Seite, womit die Verbindung zwischen den Mediumanschlüssen 7 und 8 hergestellt ist. Da beim Umschalten in die andere Schaltstellung auf alle Fälle die zuerst offene Sitzfläche geschlossen wird, bevor die andere öffnet, sind Überschneidungen mit Sicherheit vermieden.

Das Ausführungsbeispiel nach Fig. 2 unterscheidet sich von dem nach Fig. 1 im wesentlichen nur dadurch, daß es sich hier nun um kein Mittelstellungs-Ventil handelt, sondern daß zufolge der Verbindungsleitungen 34,35 von den Mediumanschlüssen 8,9 zu einem Druckraum 36 an der linken Stirnseite des Schaltkörpers 20 ein Dauersignal-Betrieb möglich ist. Die Einmündungen der Verbindungsleitungen 34,35 sind dabei über eine mittels einer Schraube 37 befestigte elastische Ventilplatte 38 abgedeckt.

Im dargestellten drucklosen Zustand des Steueranschlusses 14 befindet sich der Schaltkörper 20 in seiner rechten Endstellung, womit der rechte Sitzkörper 28 zufolge der Wirkung der Druckfeder 29 in seiner rechten Endstellung und die Dichtplatte 24 von der Sitzfläche 26 abgehoben ist. Über den geöffneten Ventilsitz besteht also eine Verbindung zwischen den Mediumanschlüssen 7,9, wobei diese Schaltstellung zufolge der Verbindung des Mediumanschlusses 9 über die Verbindungsleitung 34 zum Druckraum 36 stabil bleibt. Der gegenüberliegende Ventilsitz ist dabei in Zusammenwirkung des Sitzkörpers 27 mit der Dichtplatte 23 geschlossen.

Um das Ventil nach Fig. 2 in die andere Schaltstellung zu bringen wird über den Steueranschluß 14 Druck auf den Umsteuerkolben 21 aufgebracht, der sich damit nach links bewegt, zuerst den rechten Ventilsitz (Sitzfläche 26, Dichtplatte 24) schließt, und erst dann - zufolge der Tatsache, daß der Abstand 39 zwischen Dichtplatte 24 und Sitzfläche 26 kleiner ist als der Abstand 40 zwischen dem Ansatz 30 und dem damit zusammenwirkenden Anschlag 31 - den linken Ventilsitz (Sitzfläche 25, Dichtplatte 23) öffnet. Da nun der Druck vom Mediumanschluß 8 über die Verbindungsleitung 35 auch im Druckraum 36 wirkt, geht das Ventil in die dargestellte Schaltstellung zurück, sobald der Druck am Steueranschluß 14 wieder weggenommen wird.

Sowohl bei der Ausführung nach Fig. 1 als auch bei der nach Fig. 2 wird die Dichtwirkung, also das Anliegen der Sitzkörper 27,28 an den Dichtplatten 23,24 durch die dargestellte Anordnung der Dichtringe 32 bzw. ihre Zusammenwirkung mit den Anschlägen 31 und den Schultern 33 unterstützt, da bei geschlossenem Ventilsitz der wirksame Außendurchmesser des Dichtringes größer ist als der Durchmesser der Sitzfläche.

Im übrigen ist hier darauf hinzuweisen, daß gleiche bzw. zumindest von der Funktion her idente Teile sowohl in Fig. 2 als auch bei den folgenden Ausführungen stets mit gleichen Bezugsnummern versehen sind und daß zur Vermeidung von Wiederholungen hier und im folgenden zumindest teilweise auf die genaue Besprechung der bereits zu Fig. 1 behandelten Elemente und Funktionen verzichtet wird.

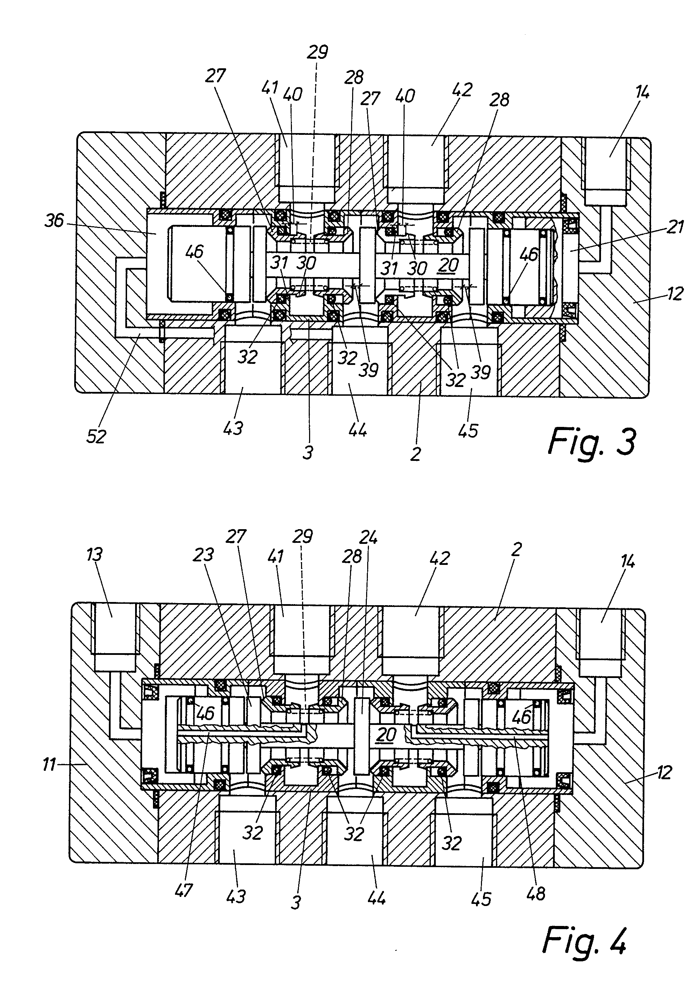

Das Ventil nach Fig. 3 ist ein 5/2-Wege-Sitzventil für Dauersignal-Betrieb, welches sich in den funktionell wesentlichen Teilen einfach als Verdoppelung der Ausführung nach Fig. 2 beschreiben läßt. Demgemäß sind nun zwei Funktionseinheiten mit gleich ausgebildeten und jeweils paarweise gegengleich mit voneinander abgewendeten Sitzflächen angeordneten axialbeweglichen Sitzkörpern 27,28 vorgesehen. Diese Sitzkörper bzw. deren Sitzflächen wirken wiederum mit Dichtplatten zusammen, wobei hier die mittlere Dichtplatte mit ihren beiden gegenüberliegenden Flächen jeweils beiden Funktionseinheiten zuzurechnen ist. Die Mediumanschlüsse sind hier mit 41 bis 45 bezeichnet; 14 ist wiederum der Steueranschluß zur Umschaltung des Schaltkörpers 20 mittels des Umsteuerkolbens 21. Zufolge der Verbindungsleitung 52 von den Mediumanschlüssen 43,44 zum Druckraum 36 ist auch hier wiederum eine Dauersignal- bzw. Umschaltfunktion wie zu Fig. 2 beschrieben gegeben.

Die Anordnung und Funktion der Dichtringe 32 entspricht auch hier wieder der gemäß den Fig. 1 und 2, was auch für die sonstigen Teile jeder Funktionseinheit gilt. Insbesonders sind auch hier wiederum die Abstände 39 der Dichtplatten zu den zugehörigen Sitzflächen der offenen Ventilsitze kleiner als die Abstände 40 der Ansätze 30 der Sitzkörper der geschlossenen Ventilsitze zu den zugehörigen Anschlägen 31, sodaß die in der Darstellung der Fig. 3 geschlossenen Ventilsitze erst dann geöffnet werden, wenn die nun offenen schon geschlossen sind, womit keine Überschneidungen auftreten können.

Die Dichtringe 32 zur Abdichtung der beweglichen Sitzkörper gegen das Einschiebegehäuse 3 weisen hier nun den gleichen Durchmesser auf wie die zur Abdichtung des Schaltkörpers 20 gegen seine Führung im Einschiebeghäuse 3 vorgesehenen Dichtringe 46, was den Vorteil einer druckausgeglichenen Betätigung des Schaltkörpers 20 ergibt.

Fig. 4 stellt ein 5/2-Wege-Sitzventil für Impulsbetrieb dar, welches im Hinblick auf die erfindungsgemäße Ausgestaltung völlig dem Ventil nach Fig. 3 entspricht. Abweichend sind hier im wesentlichen nur die wegen der unterschiedlichen Ansteuerung gegebenen Merkmale, wie etwa der zweite Steueranschluß 13 - womit sich eine im wesentlichen der Fig. 1 vergleichbare Ausbildung und Funktion der Umsteuerung des Ventils ergibt - und die Bohrungen 47,48 im Schlatkörper 20, deren Zweck darin besteht, den Schaltkörper 20 auch nach Wegfall des Steuersignals in der jeweiligen Schaltstellung zu halten.

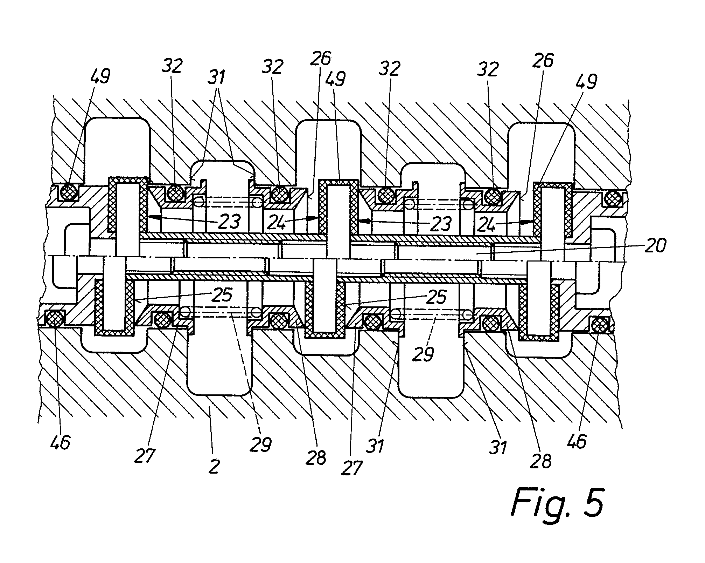

Die in Fig. 5 in zwei möglichen Schaltstellungen (im oberen Teil die rechte Endstellung und im unteren Teil die Mittelstellung) dargestellte Variante eines 5/2-Wege-Sitzventils - von dem nur der Bereich der Sitzkörper und des damit zusammenwirkenden Schaltkörpers dargestellt ist - unterscheidet sich von den oben beschriebenen Ausführungsformen im wesentlichen nur dadurch, daß nun hier die Abdichtung der beweglichen Sitzkörper über einen in eine Außennut der Sitzkörper eingelegten Dichtring 32 erfolgt, womit keine Durckunterstützung der Abdichtung der Sitzflächen der Sitzkörper an den mit elastischen Materialien 49 belegten Dichtplatten erfolgt und die Anpressung der beweglichen Sitzkörper an den jeweiligen Anschlägen am Gehäuse bzw. an den Dichtplatten alleine über die Druckfedern 29 vorgenommen wird.

**Patentansprüche**

1. Mehrwege-Sitzventil, mit einem in einer durchgehenden Bohrung des die Mediumanschlüssen aufweisenden Ventiligehäuses angeordneten Einschiebegehäuse, welches quer zur Achsrichtung geteilt, mit Zu- bzw. Abströmöffnungen versehen und gegen die Bohrung abgedichtet ist und welches in axialer Richtung bewegliche und mittels Dichtringen gegen das Einschiebegehäuse abgedichtete Sitzkörper aufnimmt, deren Sitzflächen mit auf einem axial beweglichen Schaltkörper feststehenden Dichtplatten zusammenwirken, **dadurch gekennzeichnet,** daß alle Sitzkörper (27,28) beweglich sind, daß benachbarte Sitzkörper (27,28) paarweise gleich ausgebildet und zu jeweils einer Funktionseinheit zusammengefaßt gegengleich mit voneinander abgewendeten Sitzflächen (25,26) angeordnet sind und daß jeweils der eine Sitzkörper jeder Funktionseinheit den Zuluftsitz und der andere Sitzkörper den Entlüftungssitz bildet.

2. Ventil nach Anspruch 1, dadruch gekennzeichnet, daß in an sich bekannter Weise für den an jedem der Sitzkörper (27,28) zur Abdichtung gegen das Einschiebegehäuse (3) vorgesehenen Dichtring (32) zwei Anschläge (31,33) vorgesehen sind, von denen sich der eine (31) am Einschiebegehäuse (3) und der andere (33) am Sitzkörper (27,28) befindet.

3. Ventil nach Anspruch 1 oder 2, dadurch gekennzeichnet, daß die beiden Sitzkörper (27,28) jeder Funktionseinheit mittels einer zwischen ihnen angeordneten und an ihnen angreifenden gemeinsamen Druckfeder (29) gegen Anschläge (31) am Einschiebegehäuse (3) und/oder gegen die zugehörige Dichtplatte (23, 24) gedrückt sind.

4. Ventil nach einem der Ansprüche 1 bis 3, dadurch gekennzeichnet, daß die Dichtringe (32) zur Abdichtung der beweglichen Sitzkörper (27,28) gegen das Einschiebegehäuse (3) im wesentlichen gleichen Durchmesser aufweisen, wie die zur Abdichtung des Schaltkörpers (20) gegen seine Führung im Einschiebegehäuse (3) vorgesehenen Dichtringe (46).

5. Mehrwege-Sitzventil, mit einem die Mediumanschlüsse aufweisenden Ventilgehäuse, welches in axialer Richtung bewegliche und mittels Dichtringen gegen das Ventilgehäuse abgedichtete Sitzkörper aufnimmt, deren Sitzflächen mit auf einem axial beweglichen Schaltkörper feststehenden Dichtplatten zusammenwirken, **dadurch gekennzeichnet,** daß alle Sitzkörper (27,28) beweglich sind, daß benachbarte Sitzkörper (27,28) paarweise gleich ausgebildet und zu jeweils einer Funktionseinheit zusammengefaßt gegengleich mit voneinander abgewendeten Sitzflächen (25,26) angeordnet sind un daß jeweils der eine Sitzkörper jeder Funktionseinheit den Zuluftsitz und der andere Sitzkörper den Entlüftungssitz bildet (Fig. 5).

6. Ventil nach Anspruch 5, dadurch gekennzeichnet, daß in an sich bekannter Weise für den an jedem Sitzkörper (27,28) zur Abdichtung gegen das Ventilgehäuse (2) vorgesehenen Dichtring (32) zwei Anschläge vorgesehen sind, von denen sich der eine am Ventilgehäuse (2) und der andere am Sitzkörper (27,28) befindet.

7. Ventil nach Anspruch 5 oder 6, dadurch gekennzeichnet, daß die beiden Sitzkörper (27,28) jeder Funktionseinheit mittels einer zwischen ihnen angeordneten und an ihnen angreifenden gemeinsamen Druckfeder (29) gegen Anschläge (31) am Ventilgehäuse (2) und/oder gegen die zugehörige Dichtplatte (23,24) gedrückt sind.

8. Ventil nach einem der Ansprüche 5 bis 7, dadurch gekennzeichnet, daß die Dichtringe (32) zur Abdichtung der beweglichen Sitzkörper (27,28) gegen das Ventilgehäuse (2) im wesentlichen gleichen Durchmesser aufweisen, wie die zur Abdichtung des Schaltkörpers (20) gegen seine Führung im Ventilgehäuse (2) vorgesehenen Dichtringe (46).

0264358

Fig. 1

Fig. 2

0264358

Fig. 3

Fig. 4

0264358

Fig. 5